(19) Europäisches Patentamt / European Patent Office / Office européen des brevets

(11) **EP 3 348 027 B1**

(12) **EUROPEAN PATENT SPECIFICATION**

(45) Date of publication and mention of the grant of the patent:
**20.11.2019  Bulletin 2019/47**

(51) Int Cl.:
*H04L 12/801* (2013.01)  *H04L 12/841* (2013.01)
*H04L 12/835* (2013.01)

(21) Application number: **15763891.7**

(22) Date of filing: **11.09.2015**

(86) International application number:
**PCT/EP2015/070904**

(87) International publication number:
**WO 2017/041863 (16.03.2017 Gazette 2017/11)**

(54) **TECHNIQUE FOR MULTI-CONNECTIVITY**

VERFAHREN FÜR MULTIKONNEKTIVITÄT

TECHNIQUE DE CONNECTIVITÉ MULTIPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.07.2018  Bulletin 2018/29**

(73) Proprietor: **Telefonaktiebolaget LM Ericsson (PUBL)**
**164 83 Stockholm (SE)**

(72) Inventors:
- **WIGREN, Torbjörn**
  **S-756 53 Uppsala (SE)**
- **DUDDA, Torsten**
  **52064 Aachen (DE)**
- **KARAKI, Reem**
  **52074 Aachen (DE)**
- **VESELY, Alexander**
  **A-8330 Feldbach (AT)**

(74) Representative: **Zacco Sweden AB**
**Valhallavägen 117**
**Box 5581**
**114 85 Stockholm (SE)**

(56) References cited:
**EP-A1- 2 835 925       US-A1- 2015 085 646
US-A1- 2015 181 473**

- **NOKIA SIEMENS NETWORKS (RAPPORTEUR): "Email Discussion Report on U-Plane Alternatives [81bis#19]", 3GPP DRAFT; R2-131621 SCE UPLANE EMAIL DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 10 May 2013 (2013-05-10), XP050699806, Retrieved from the Internet: URL:http://www.3gpp.org/ftp/tsg_ran/WG2_RL 2/TSGR2_82/Docs/ [retrieved on 2013-05-10]**
- **"3rd Generation Partnership Project; Technical Specification Group Radio Access Network; Evolved Universal Terrestrial Radio Access (E-UTRA); Study on Small Cell Enhancements for E-UTRA and E-UTRAN - Higher layer aspects (Release", 3GPP STANDARD; 3GPP TR 36.842, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V0.3.0, 23 August 2013 (2013-08-23), pages 1-51, XP050769463, [retrieved on 2013-08-23]**

## Description

### Technical Field

The present disclosure generally relates to a technique for multi-connectivity. More specifically, and without limitation, a method and a device are provided for distributing data packets in a radio access network providing multi-connectivity to a user-equipment.

### Background

Dual connectivity as an example for multi-connectivity is specified in Long Term Evolution (LTE) Release 12. A User Equipment (UE) may receive from and/or transmit to at least two different LTE base stations (evolved Node B or eNB) simultaneously. The two base stations are denoted as Master eNB (MeNB) and Secondary eNB (SeNB).

In an exemplary implementation, data flow from the core network to the MeNB is split at the MeNB. The MeNB routes subsets of data packets dynamically either directly to the UE or via a backhaul link to the SeNB, which transmits the received subset of data packets to the UE.

The data flow from the MeNB to the SeNB via the backhaul link is typically controlled by a flow control protocol at the MeNB. The flow control protocol conventionally relies upon status feedback provided by the SeNB to the MeNB. The feedback includes the highest successfully delivered Packet Data Convergence Protocol (PDCP) Sequence Number according to standard document 3GPP TS 36.425 V12.1.0, Sect. 5.5.3.6.

The existing feedback protocol provides, however, no information as to a filling state of a buffer at the SeNB. Therefore, the flow control at the MeNB receives no measurement values for the quantity that is to be controlled. One could modify the existing feedback protocol to also report the filing state of the SeNB buffer. However, this would require modifications at the SeNB, increase the complexity of the SeNB and add to the control signaling overhead on a backhaul network.

US20150085646A1 discloses a mechanism for reducing packet transmissions. The master base station (MeNB) receives an indication from a secondary base station (SeNB) of an air-interface connection loss between the SeNB and the UE. The MeNB can identify remaining packets that were not sent from the SeNB to the UE based, in part, on the ACKs received from the UE and the packet delivery information received from the SeNB, wherein the remaining packets are not sent to the UE due to the connection loss between the SeNB and the UE. The MeNB can send the remaining packets from the MeNB to the UE.

EP2835925A1 discloses a method for performing a SeNB change for a UE in dual connectivity. When reconfiguring a data radio bearer going via the SeNB to another target base station, the UE may compile a PDCP status report comprising status information for all of the data radio bearer going via the SeNB, accompanied respectively by a radio bearer ID to identify the radio bearer to which the status report information pertains. Further, the PDCP status report is directly transmitted by the UE to the MeNB to avoid the backhaul delay between the SeNB and the MeNB.

### Summary

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention. Accordingly, there is a need for a technique that allows controlling data flow in a multi-connectivity network that is more accurate at least in some situations.

### Brief Description of the Drawings

Further details of embodiments of the technique are described with reference to the enclosed drawings, wherein:

Fig. 1    illustrates a schematic block diagram of a device for sending data packets in a radio access network providing multi-connectivity;

Fig. 2    shows a flowchart for a method of sending data packets in a radio access network providing multi-connectivity;

Fig. 3    schematically illustrates a radio access network providing multi-connectivity to a user equipment;

Fig. 4    schematically illustrates a backhaul signaling based on which the data packets can be sent in the method of Fig. 2;

Fig. 5    illustrates a schematic block diagram for a control mechanism implementable by the method of Fig. 2;

Fig. 6    shows a schematic block diagram for a downlink transport;

Fig. 7    shows a schematic block diagram for generating a buffer window;

Fig. 8      shows a schematic block diagram for generating a feedback;

Fig. 9      shows schematic block diagrams for an uplink transport;

Fig. 10    shows a schematic block diagram for a system implementation;

Fig. 11    shows a schematic block diagram for a time-domain implementation, which corresponds to the block diagram of Fig. 5;

Fig. 12    schematically illustrates a Popov stability criterion;

Fig. 13    shows a first example of a Popov plot;

Fig. 14    shows a real part of the Popov plot of Fig. 13; and

Fig. 15    shows a second example of a Popov plot.

## Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a Long Term Evolution (LTE) implementation, it is readily apparent that the technique described herein may also be implemented in any other wireless communication network, in combination with or including a Wireless Local Area Network (WLAN or WiFi) according to the standard family IEEE 802.11 (e.g., IEEE 802.11a, g, n, ac or ad) and/or a Worldwide Interoperability for Microwave Access (WiMAX) according to the standard family IEEE 802.16.

Moreover, those skilled in the art will appreciate that the services, functions, steps and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising a computer processor and memory coupled to the processor, wherein the memory is encoded with one or more programs that may perform the services, functions, steps and implement the modules disclosed herein.

In the description, latency is used interchangeably for delay. Downlink specifies a link from the master eNB to the secondary eNB, and uplink vice versa.

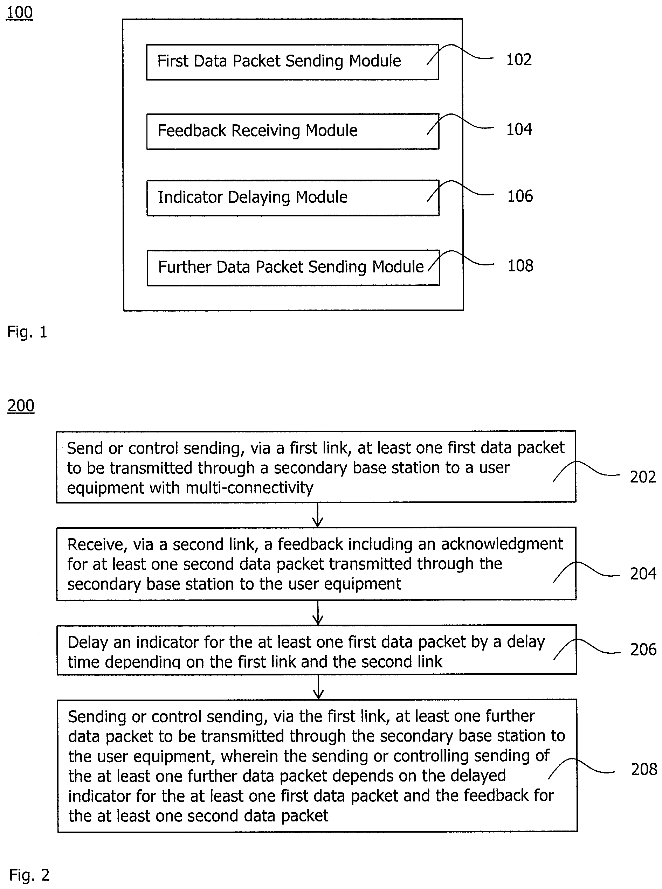

Fig. 1 schematically illustrates a block diagram of a device 100 for sending data packets in a radio access network for multi-connectivity, e.g., dual connectivity. The multi-connectivity may be provided to a user equipment by means of a master base station and at least one secondary base station.

The device 100 includes a module 102 for sending (or controlling sending) first data packets via a first link from the master base station to the secondary base station and a module 104 for receiving, via a second link, feedback from the secondary base station at the master base station. An indicator for the first data packets is delayed by means of a module 106. Depending on the delayed indicator and the feedback, a module 108 sends further data packets from the master base station to the secondary base station.

The modules may be implemented separately or in combination. E.g., the function of the modules 102 and 108 may be implemented by a combined data packet sending module.

The modules may be implemented in the radio access network, e.g. at the master base station, at a dedicated node or in a distributed manner. Alternatively or in addition, any of the modules may be implemented as a function module in a virtual node.

Fig. 2 shows a flowchart for a method 200 of sending data packets in a radio access network. The radio access network includes a master base station and a secondary base station for providing multi-connectivity to a user equipment. The method comprises performing or triggering a step 202 of sending (or controlling sending), via a first link, at least one first data packet to be transmitted through the secondary base station to the user equipment. In a step 204, a feedback including an acknowledgment for at least one second data packet transmitted through the secondary base station to the user equipment is received via a second link.

An indicator for the at least one first data packet is delayed in a step 206 by a delay time depending on the first link and the second link. Depending on the delayed indicator for the at least one first data packet and the feedback for the at least one second data packet, at least one further data packet to be transmitted through the secondary base station to the user equipment is sent (or the sending is controlled) via the first link in a step 208 of the method 200.

The device 100 may implement the method 200. E.g., the modules 102 to 108 may be configured to perform the step 202 to 208, respectively.

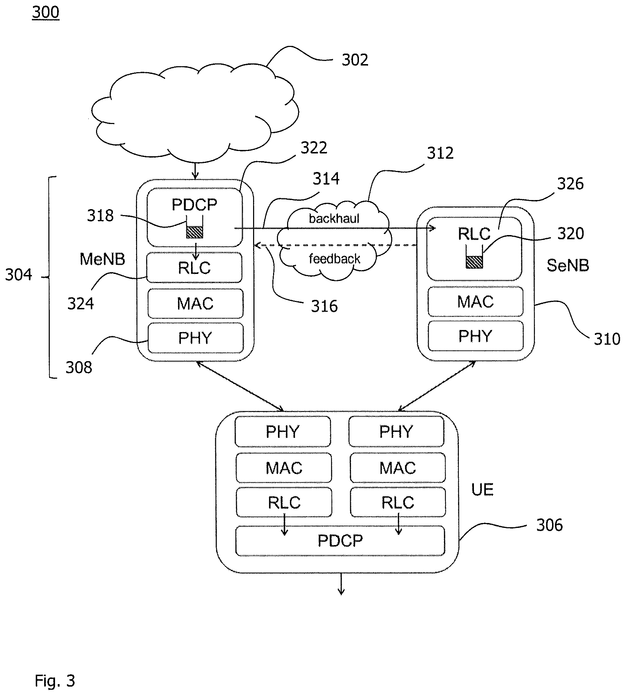

Fig. 3 schematically illustrates a telecommunications network 300 as an exemplary LTE environment for implementing the technique. The telecommunications network 300 includes a core network (CN) 302, a radio access network (RAN) 304 for radio multi-connectivity with a user equipment (UE) 306.

The technique is described with reference to Fig. 3 in the context of an LTE network 300, i.e. using an evolved Universal Mobile Telecommunications System (UMTS) Terrestrial Radio Access Network (E-UTRAN) as the RAN 304. It should be understood that features and effects described herein are equally applicable to wireless access networks and UEs 306 implementing other radio access technologies and/or standards. LTE is used as an example network environment. The technique is suitable for LTE (e.g., LTE-Advanced), and using LTE is particularly useful for understanding the technique and its advantages.

The RAN 304 comprises a master baste station 308, e.g., a master eNB (MeNB), and at least one secondary base station 310, e.g., a secondary eNB (SeNB). The MeNB 308 and the SeNB 310 are connected by a backhaul network 312. The backhaul connection includes a first link 314 from the MeNB 308 to the SeNB 310, which is also referred to as a downlink or transport link, and a second link 316 from the SeNB 310 to the MeNB 308, which is also referred to as an uplink or feedback link.

The MeNB 308 receives from the CN 302 data packets to be transmitted to the UE 306. The MeNB 308 includes a master buffer 318. The master buffer 318 includes data packets that are selectively sent to the SeNB 310. The SeNB 310 includes a secondary buffer 320 for data packets to be transmitted to the UE 306. The data buffers 308 and 310 may also be referred to as queues.

The data packets may include Packet Data Units (PDUs). In a split-bearer architecture, e.g., for LTE dual connectivity, the downlink data flow is split on a Physical Downlink Convergence Protocol (PDCP) layer 322 in the MeNB 308. The PDCP layer 322 routes PDCP PDUs dynamically either via a Radio Link Control (RLC) layer 324 of the MeNB 308 to the UE 306 or, according to the step 202, via the first link 314 (that is also referred to as a first backhaul channel) to the SeNB 310. A RLC layer 326 of the SeNB 310 stores the received PDUs in the secondary buffer 326 and transmits the stored PDUs to the UE 306.

Solid arrows in Fig. 3 indicate (potential) directions of user plane data. The dashed arrow indicates a direction for the feedback according to the step 204. The feedback includes an acknowledgment 424 used for flow control between the eNBs 308 and 310 according to the step 308.

The data buffers 318 and 320 are illustrated in the MeNB 308 and SeNB 320, respectively. While Fig. 3 illustrates an implementation location in the MeNB PDCP 322 and SeNB RLC 326 for data buffers 318 and 320, respectively, the data buffers 318 and/or 320 may also be implemented in another layer, across multiple layers or in a dedicated protocol layer. The terms "backhaul" and "transport" may be used interchangeably.

The feedback between the MeNB 308 and the SeNB 310 may be required for the split-bearer operation in dual connectivity, e.g., to balance the data flow between MeNB 308 and SeNB 310. The feedback allows the MeNB 308 to determine how much data it needs to send to the SeNB 310 so that the SeNB 310 transmitter queue 320 is neither underutilized nor overloaded.

The technique may be implemented using LTE and WiFi aggregation. Similarly to dual connectivity in LTE, LTE and WiFi may be aggregated. In one example protocol architecture, the data splitting point is the same as in the split-bearer architecture of dual connectivity, i.e. on the PDCP layer of the MeNB 308. Instead of an LTE SeNB 310 (as illustrated in Fig. 3), a WiFi access point is employed as the secondary base station 310. Instead of the RLC protocol 326 (and optionally a Medium Access Control protocol and/or Physical layer protocol) at the secondary base station 310, WiFi protocols may be employed at the secondary base station 310. The same applies to the protocol layers in the UE 306 for a connection to the WiFi access point 310.

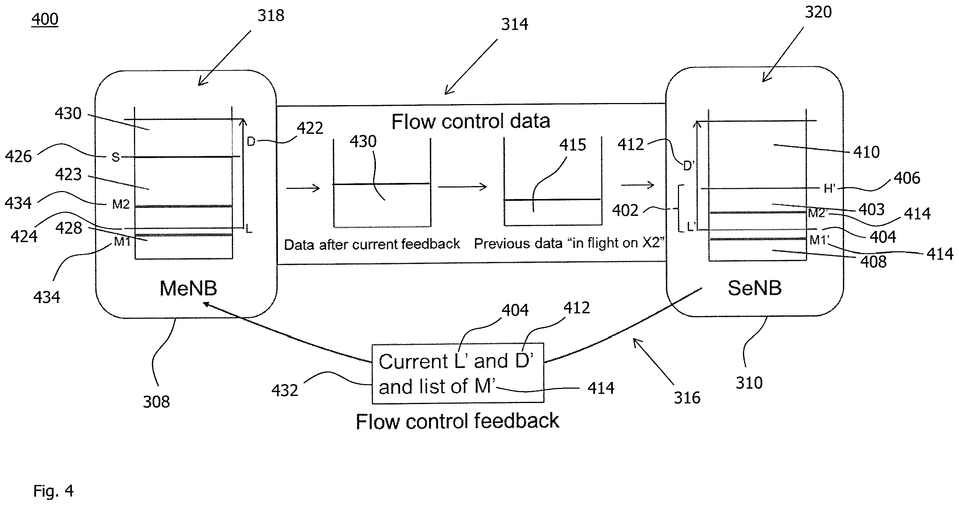

A backhaul signaling 400 for controlling a flow of the data packets is schematically illustrated in Fig. 4. The method 200 controls the flow of the data packets using a window 402. The device 100 performing the method 200 may be implemented at the MeNB 308. The method 200, e.g., the step 208, implements a controller for the flow of the data packets. E.g., the module 108 may be referred to as the controller.

Fig. 4 depicts quantities used in an embodiment of the technique. A lower edge L' of the window 402 is shown at reference sign 404 and an upper edge H' of the window 402 is shown at reference sign 406. The lower edge 404 is a highest sequence number of those PDUs that have been successfully transmitted to the UE 306. The upper edge 406 is a highest sequence number of those PDUs that are stored in the secondary buffer 320 for transmission to the UE 306. The window 402 includes the PDUs 403 having sequence number in the range of L'+1 to H'. Previously (and at least in part successfully) transmitted PDUs 408 have sequence numbers up to, and including, L'.

The difference H'-L' corresponds to the PDUs in the secondary buffer 320 currently available for transmission at the SeNB 310. Alternatively or in addition, the window 402 comprises those PDUs 403 in the secondary buffer 320 that are not acknowledged to the MeNB 308.

Storage locations 410 in the secondary buffer 320 are available for the further PDUs 430. An amount D' of PDUs requested by the SeNB 310 is shown at reference sign 412. Individual PDUs (M1, M2, etc.) that are declared to be lost at the SeNB 310 are indicated at reference sign 414.

The feedback 432 from the SeNB 310 as sent to the MeNB 308 includes the current lower edge 404, which is received as the acknowledgement 424 for the second PDUs 408. Optionally, the feedback 432 further includes the amount 412 of requested PDUs and/or a list of the lost PDUs 414.

From the perspective of the MeNB 308, the first PDUs 423 (as the first data packets) are already sent to the SeNB 310 according to the step 202. The indicator S is a highest sequence number of the PDUs sent to the SeNB 310. The first PDUs 423 may include data packets 415 that are still "in flight" on the first backhaul link 314, e.g., on an X2 link or at an X2 interface. Alternatively or in addition, the first PDUs 423 may include the PDUs 403 already stored in secondary buffer 320.

The controller may control a filling level and/or a dwell time of the PDCP PDUs 403 in the window 402 of the SeNB 310. In one embodiment, the step 208 controls the secondary buffer 320 according to a control objective. The control objective may include minimizing the dwell time of PDUs 403 at the SeNB 310. Alternatively or in addition, the control objective may include sufficient margins for the data volume 403 retained at the SeNB 310 to avoid an empty window 402. E.g., the control objective may require that the difference H'-L' exceeds a predefined threshold.

The window 402 might become empty, e.g., in case of a sudden increase of an air interface capacity (between the SeNB 310 and the UE 306) that would allow the secondary buffer 320 to run empty before the controller has a chance to send further data packets according to the step 208. The result would be an unwanted interruption of the data transfer.

One embodiment defines the control objective based on the feedback 432 including the requested window size 412 received at the MeNB 308 from the SeNB 310. From the perspective of the MeNB 308, the current window 402 is not known but estimated based on the feedback 432.

The feedback 432 as received at the MeNB 308 is delayed, e.g., due to the transport on the second backhaul link 316. Quantities defined at the MeNB 308 are labeled without apostrophe. Quantities defined at the SeNB 310 are labeled with an apostrophe. A sequence number 424 for the highest acknowledged sequence number, as received at the MeNB 308 in the step 204, is L. The highest acknowledged sequence number is also referred to as the acknowledgment 424.

The acknowledgment 424 for the second PDUs 408 is based on the reported sequence number 404, i.e., the highest acknowledged sequence number L' received at the SeNB 310 from the UE 306. A time dependency of the highest acknowledged sequence number 404 at the SeNB 310 and the highest acknowledged sequence number 424 at the MeNB 308 may be related according to $L(t-T_{UL}) = L'(t)$, wherein $T_{UL}$ is the transport delay of the second backhaul link. The acknowledgment 424 defines, at the MeNB 308, a bottom of a window estimated for the window 402 of the SeNB 310.

A top 426 of the estimated window is defined based on the highest sequence number, S, transmitted from the MeNB 308 in the step 202. This means that the difference between these two values S and L represents the packets in flight in the first link 314 from the MeNB to the secondary eNB, in the secondary buffer 320 of the SeNB 310 and in the wireless interface to the UE 306. The two values, S and L, are known in the MeNB 308. However, the difference S-L does not accurately define a control feedback determined by a reception rate of the UE 306 and/or a channel capacity of the radio connectivity from the SeNB 310 to the UE 306. Only if all transport delays were negligible, the difference S-L would represent the size H'-L' for the window 402 of the SeNB 310.

At least some conventional techniques do not take into account delays, e.g., transport delays associated with the backhaul network 312. Thus, the conventional controller is affected by at least one of a delay caused by the first link 314 (i.e., a downlink transport network from the MeNB to the SeNB), a dwell time delay of the secondary buffer of the SeNB, and a delay in the downlink and uplink radio transmission of data packets from the SeNB to the UE and back. Furthermore, a conventional estimate is inaccurate due to a signaling delay cause by the second link 316, i.e., the uplink transport network from the SeNB to the MeNB, which affects the signaling of the latest acknowledged PDCP PDU and the requested SeNB window.

The step 204 uses the feedback 432 received in the step 204 as a flow control feedback for a refined estimate of the window 402. Based on the estimated window, the flow of data packets, i.e., the sending of the further data packets, is controlled according to the step 208. The embodiment may further achieve global stability by frequency shaping in a signal path the control mechanism.

A first embodiment uses control signaling defined in document 3GPP TS 36.425, V12.1.0, for the feedback 432. The feedback 432 includes at least one of the highest successfully delivered PDCP PDU 404 received as the acknowledgment 424, a number of requested additional bytes 412, and the missing PDUs 414 on the backhaul interface X2. In a second embodiment, additionally information is included in the flow control feedback 432 that is sent from SeNB 310 to MeNB 308. The additional information includes at least one of a latency estimate or a latency measurement of the one-way latency on the backhaul channel 312 from MeNB 308 to SeNB 310.

The measurement can be obtained, e.g., by calculating a time difference between a sending time and a receiving time of one or more data packets on the backhaul network 312. E.g., the time difference is calculated using the first data packets 423, the second data packets 408 and/or the further data packets 430 on the first link 314 (i.e., the downlink). For this purpose, the MeNB 308 includes a timestamp (e.g., indicative of the sending time) in each data packet sent by the MeNB 308 via the first link 314 in the backhaul network 312 to the SeNB 310.

If the downlink transport delay and the uplink transport delay are equal (e.g., as an approximation or by construction of the backhaul network 312), the delay time is determined using the above additional information. If the downlink and uplink transport delays differ, e.g., due to different uplink and downlink loads, the method 200 further comprises measuring or triggering measuring the uplink transport delay, e.g., implemented in the MeNB 308.

The measurement includes calculating a further time difference between sending time and receiving time of uplink data. For this purpose the SeNB 310 includes a timestamp for the sending time, e.g., in the feedback 432 sent via the second link 316 on the backhaul network 312 to the MeNB 308.

The feedback 432 may be provided periodically, e.g., in the first or second embodiment. In one implementation of the second embodiment, each feedback 432 includes the additional information. E.g., the additional information is sent based on a feedback periodicity used also for other feedback indications (e.g., the highest successfully delivered PDCP PDU, the requested bytes, the missing X2 PDUs as described above). In another implementation, lower feedback periodicities may be used, e.g., in the range of 10 ms to 20 ms or 100 ms. Alternatively, the feedback 432 is provided at the feedback periodicity and the additional information is included in every *n*-th feedback 432.

Alternatively or in addition, the feedback 432 is provided upon request. In one embodiment, the SeNB 310 provides the feedback 432 only upon (e.g., explicit) request from the MeNB 308.

In one implementation, the feedback 432 is requested by inserting the sending timestamp in the data packets sent from the MeNB 308 to SeNB 310. The SeNB 310 determines whether the timestamp is present in the data packet. If the timestamp is present, the SeNB 310 provides the feedback 432, e.g., according to the first embodiment, and/or includes the additional information (e.g., a backhaul latency measurement result) according to the second embodiment.

Optionally, the SeNB 310 initiates time stamping upon the request. The time stamping enables measurements of the uplink transport delay. Alternatively or in addition, probing signals are used to measure the time delay, e.g., according to an Internet Control Message Protocol (ICMP), such as a ping command for measuring a round-trip time. The probing signals may be sent by the MeNB 308 on the first link 314 and reflected by the SeNB 310 on the second link 316.

The technique may be implemented assuming that an outgoing air interface rate at the SeNB 310 (i.e., a transmission rate from the SeNB 310 to the UE 306) is known at the MeNB 308. Alternatively or in addition, for any given implementation (e.g., at the SeNB 310) of computing the requested amount 412 as a function of the backhaul delay (e.g., the reported downlink transport delay) and the outgoing air interface rate, the MeNB 308 may compute (e.g., using the inverse of the function) the outgoing air interface rate of the SeNB 310. Furthermore, e.g., as an alternative to computing or estimating the outgoing air interface rate of the SeNB 310, the feedback 432 may signal the outgoing air interface rate. A sending rate at the MeNB 308 may be derived in the step 208 based on the outgoing air interface rate. For example, the sending rate at the MeNB 308 may be equal to the outgoing air interface rate of the SeNB 310.

An implementation of the technique is described in more detail. Any subset of function modules described for the implementation can be combined with above embodiments. In symbols used below, a subscript "S" denotes a quantity available at the SeNB 310, a subscript "M" denotes a quantity available at the MeNB 308, a subscript "DL" denotes a quantity related to the downlink transport channel, i.e., the first link 314, and a subscript "UL" denotes a quantity related to the UL transport channel, i.e., the first link 316.

The downlink transport delay is denoted by $T_{DL}$. The uplink transport delay is denoted by $T_{UL}$. A current time is denoted by $t$. The latest acknowledged sequence number 404 in the SeNB 310 is denoted by $y_{UL,S}(t)$. The sequence number 426 of the currently transmitted PDCP PDU is denoted by $q_{DL,M}(t)$.

If the error or deviation from the control objective was computed according to

$$requestedWindow - \left(q_{DL,M}(t) - y_{UL,S}(t - T_{UL})\right),$$

e.g., by sending the number of PDCP PDUs that corresponds to this quantity, this quantity does not represent the number of PDCP PDUs in the window 402 of the SeNB 310. Rather, it is based on a number of data packets that are in flight. This is, however, not the quantity that should be subject to the feedback control. It should rather be the number, 'H'-L', of PDCP PDUs in the SeNB 310, or equivalently, the dwell time.

In order to obtain a more accurate estimate of the size, 'H'-L', of the window 402 of the SeNB 310 for use in the MeNB 308, the best available information at the MeNB 308 for the bottom 404 of the window 402 (optionally including the data packets "in flight" from the SeNB 310 to the UE 306) is the acknowledgment 424, that may be representable by the quantity

$$y_{UL,M}(t) = y_{UL,S}(t - T_{UL}).$$

That is, $y_{UL,M}(t)$ is the acknowledgment 424 on the latest acknowledged PDCP PDU (i.e., the second data packet 408 for estimating the bottom 404 of the window 402 of the SeNB 310) that is received in the MeNB 308 at time t. The acknowledgment 424 is delayed by the uplink transport delay $T_{UL}$ relative to the time when the feedback including the current bottom 404 was actually valid and/or sent.

Therefore, the best estimate of the volume H'-L' of data packets 403 in the window 402 of the SeNB 310 is $q_{DL,S}(t\text{-}T_{UL})$, wherein $q_{DL,S}(t)$ denotes the packet number of the top 406 of the window 402 of the SeNB 310 at time $t$. However, due to the downlink delay, the first data packet 423 represented by the quantity $q_{DL,S}(t\text{-}T_{UL})$ at the SeNB 310 was sent from the MeNB 308 at time $t\text{-}T_{UL}\text{ -}T_{DL}$, i.e.

$$q_{DL,S}\left(t - T_{UL}\right) = q_{DL,M}\left(t - T_{UL} - T_{DL}\right).$$

Thus, the control estimate of the volume H'-L' of data 403 in the window 402 of the SeNB 310 is

$$w_{est,S}(t) = q_{DL,M}\left(t - T_{UL} - T_{DL}\right) - y_{UL,M}(t).$$

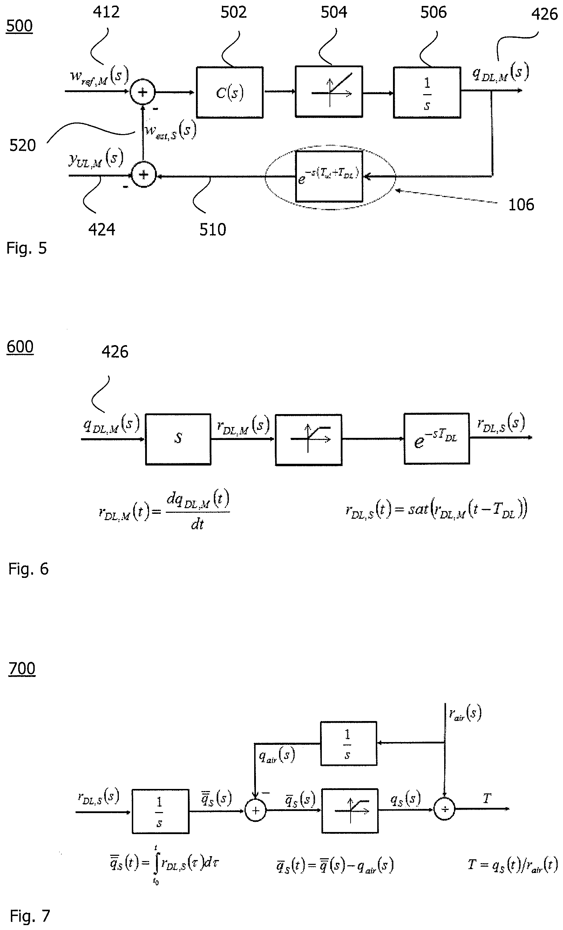

Fig. 5 shows a schematic block diagram 500 for a Laplace-transformed representation for the steps 206 and 208. The indicator 426 is delayed by the indicator delaying module 106 resulting in the delayed indicator shown at reference sign 510. The control estimate used in the step 208 is shown at reference sign 520.

The delayed indicator 510, i.e., the quantity $q_{DL,M}(t\text{-}T_{UL}\text{-}T_{DL})$ is generated by delaying the sequence of the sequence number, i.e., the indicator 426, for PDCP PDUs (i.e., the first data packets) sent from the MeNB 308 using the module 106, e.g. implemented by a delay buffer in the MeNB 308. The delay buffer may store the time-stamped sequence number 426 for later generation of the sequence $w_{est,S}(t)$.

In the block diagram 500, $w_{ref,M}(s)$ is the Laplace transform of the reference signal (i.e., the requested window size 412), $C(s)$ is a frequency-shaping controller transfer function 502, $1/s$ denotes integration that transforms the commanded sequence number rate at the output of $C(s)$ to the Laplace transform of the transmitted sequence number $q_{DL,M}(s)$. This quantity is then fed back to the delay buffer 106 depicted in Fig. 5, wherein the Laplace transform $e^{-s(T_{UL}+T_{DL})}$ represents the delay time $T_{UL}+T_{DL}$. $y_{UL,S}(s)$ and $w_{est,s}(s)$ are the Laplace transforms of the time signals $y_{UL,S}(t)$ and $w_{ref,S}(t)$, respectively. The block 504 between $C(s)$ and $1/s$ is a saturation (in the absence of uplink data).

The delay buffer may be implemented in the MeNb 308. The delay buffer may be a circular buffer

An implementation of the control mechanism, e.g., implemented by the step 208, is described. The block diagram 500 in Fig. 5 is implemented at the MeNB 308.

Fig. 6 shows a schematic block diagram 600 for the downlink transport via the first link 314. Quantities indicated in Fig. 6 include the Laplace transform $q_{DL,M}(s)$ of the sequence number (SN) signal of indicator 426 at the MeNB 308, the Laplace transform $r_{DL,M}(s)$ of the SN rate of the MeNB 308 and the Laplace transform $r_{DL,S}(s)$ of the SN rate received at the SeNB 310. $e^{-sT_{DL}}$ represents the delay of the downlink transport channel. The downlink transport delay may be on the order of 100 ms to 300 ms, e.g., 200 ms.

A rate limitation of the middle block is due to the Shannon theorem, i.e., every channel is characterized by a maximal rate. Therefore, a transformation to rate is allows to obtain a correct control system modeling.

Fig. 7 shows a schematic block diagram 700 of the window generation in the SeNB 310. Quantities shown in Fig. 7 include the Laplace transform $r_{air}(s)$ of the outgoing sequence number rate over the air interface, the Laplace transform $q_{air}(s)$ of the integrated outgoing sequence number rate, i.e. the outgoing sequence number over the air interface, and the Laplace transform $\bar{\bar{q}}(s)$ of the integrated incoming sequence number rate, i.e. the incoming sequence number of the received PDCP PDU.

The circles with + and ÷ denote addition and division. The division is to be interpreted as done in the time domain, not in the Laplace domain.

The saturation block (after the summation) represents the fact that the data volume of the secondary window is positive and bounded by the storage capacity of the buffer.

$T$ is the estimate of the dwell time of the window, obtained by a time domain division. Below, it is assumed that the outgoing air interface rate is known in the MeNB 310. In case it is known how the requested amount 412 is computed from the backhaul delay and the outgoing transmission rate at the SeNB 310, a back computation may be performed to derive the outgoing sending rate at the MeNB 308. Otherwise, additional feedback signaling may be implemented.

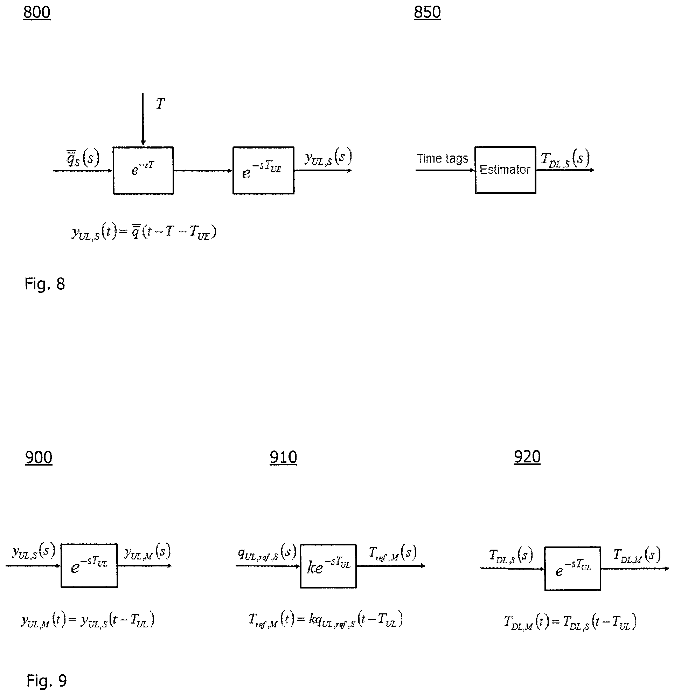

Fig. 8 shows a schematic block diagram 800 for generating the feedback 432 in the SeNB 310. The estimate 850 of the downlink delay is, in general, a time varying signal. It may be assumed that the time variation is so slow that it can be approximated as constant.

Quantities shown in Fig. 8 include the Laplace transform $y_{UL,S}(s)$ of the current highest acknowledged sequence number 404 in the SeNB 310, the Laplace transform $T_{DL,S}(s)$ of the estimated downlink transport delay, and $T_{UE}$ represents the "acknowledgement" delay due to UE processing, UE reception and UE transmission.

Fig. 9 shows a schematic block diagrams 900, 910 and 920 for the uplink transport of the feedback 432 via the second link 316. Quantities shown at 900 include $e^{-sT_{UL}}$ representing the Laplace transform of the uplink transport delay. At 910, $q_{UL,ref,S}(s)$ represents the Laplace transform of the requested window size 412 of the SeNB 310. $k$ is a scale factor that transforms the window size to a time reference value. At 902, $T_{DL,M}(s)$ represents the Laplace transform of the downlink transport delayed, as received as feedback 432 at the MeNB 308. This quantity may be treated as constant for the purpose of stability analysis.

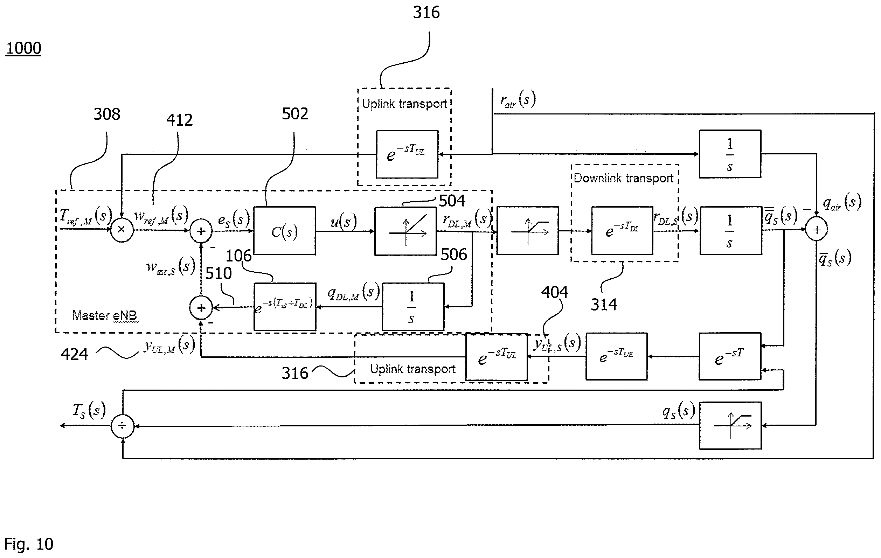

Fig. 10 shows a schematic block diagram for a detailed system implementation of the technique achieving a delay-compensated window-based flow control mechanism. Like reference signs indicate corresponding features. The operators $1/s$ and s (e.g., in the blocks 506, 600, 700 and 1000) for the MeNB 308 and the downlink transport link 316, respectively, cancel each other. The result is two cascaded saturations with gains varying between 0 and 1. Therefore, they can be treated as one when the loop gain is calculated. The resulting block diagram of a complete control system implementation is depicted in Fig. 10.

For an implementation of the controller filter 502 in a digital computer, the continuous time filter may be transformed to a discrete time filter, e.g., by replacement of the Laplace transform variable $s$ which represents differentiation, to $q^{-1}$ which represents a shift backward in time as $q^{-1}u(t) = u(t - T_S)$, where $u(t)$ represents a signal varying in time and where $T_S$ denotes the sampling period. One often used transformation in prior art is the so called Tustin's approximation given by

$$s \rightarrow \frac{2}{T_S} \frac{1-q^{-1}}{1+q^{-1}}$$

Tustin's approximation maps a stable continuous time filter onto a stable discrete time filter. Furthermore, its approximation accuracy is of second order which is a further advantage.

To explain the controller development, a continuous time controller filter is first designed using one of many available design methods of the prior art. As an example the result could be a so called lead filter given in its simplest form as

$$C(s) = KN \frac{s+b}{s+NB}.$$

Here $K$, $N$ and $b$ are parameters obtained from the applied controller design method. This determines the exact frequency selective properties of the controller filter.

The transformation to a discrete time filter then consists of insertion of Tustin's approximation in the lead filter. After some simplifications the following discrete time filter is obtained

$$C(q^{-1}) = KN \frac{(2+bT_S)+q^{-1}(-2+bT_S)}{(2+NbT_S)+q^{-1}(-2+NbT_S)}.$$

Next noting that in a feedback situation, the controller filter of Fig. 3 would take the signal before the filter and filter it to obtain the signal after the filter. These signals are denoted $e(t)$ (i.e., the control error) and $u(t)$ (i.e., the control signal), respectively. Hence, it holds that

$$u(t) = KN \frac{(2+bT_S)+q^{-1}(-2+bT_S)}{(2+NbT_S)+q^{-1}(-2+NbT_S)} e(t).$$

By inspection, the above is a discrete time infinite impulse response (IIR) filter. Simple algebraic manipulations and using the definition of the time shift operator $q^{-1}$ results in the following discrete time difference equation

$$u(t) = \frac{2-NbT_S}{2+NbT_S} u(t-T_S) + KN \frac{2+bT_S}{2+NbT_S} e(t) + KN \frac{-2+bT_S}{2+NbT_S} e(t-T_S)$$
$$= r_1 u(t-T_S) + s_0 e(t) + s_1 e(t-T_S).$$

Here, $r_1$, $s_0$ and $s_1$ are parameters computed form the controller parameters and the sampling period. If the continuous time filter is stable, so is the resulting difference equation.

The same procedure is followed in case higher order filters are transformed to discrete time.

Delays can be transformed with the same technique, using a Taylor series expansion of the Laplace transform of a delay $T$, given by $e^{-sT}$. Another alternative that is well known in prior art and more suited for transformation of a delay to discrete time is the so called zero order hold (ZoH) sampling technique that is commonly applied in prior art in the field of control. To summarize this technique, the continuous time filter, possibly with a delay incorporated, is formulated as a differential equation. In case the order is higher than 1 the differential equation will be a vector differential equation. For linear systems like the one of the present application, such solution has a well known and unique general solution that can be written down as an integration formula. The transformation to discrete time then only requires that the integration solution formula is applied from one sampling instance to the next. By solving the resulting integrals, parameters such as $r_1$, $s_0$ and $s_1$ are obtained. The result is a difference equation.

Moreover, the controller design and the above transformation may be performed once for manufacture. The controller filter is configured in terms of the discrete time parameters, here denoted $r_1$, $s_0$ and $s_1$. There is hence no need to re-compute anything but the difference equation above. That requires 1 multiply and two multiply and add operations per sampling period. This is a negligible computational complexity.

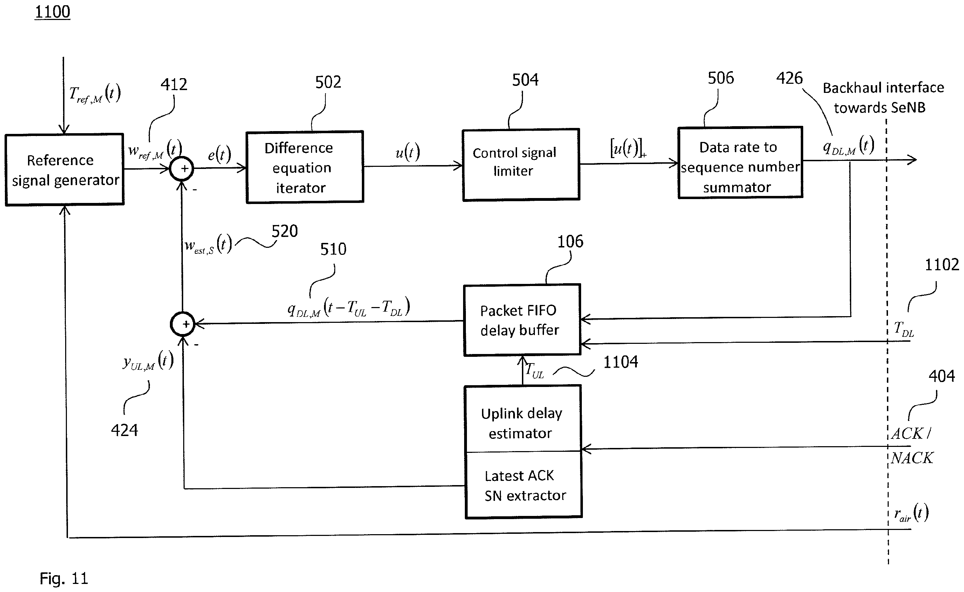

An implementation of the filter 502 is described with reference to Fig. 11 including a schematic block diagram 1100 of the discrete time controller implementation in the MeNB 308. The SeNB 310 functionality for the control loop may be limited to sampling of the needed signals.

Fig. 11 shows a functional block diagram 1100 of the controller mechanism. The circles represent points where the incoming signals are summed. A minus sign indicates a reversal of sign of the incoming signal (before summation), thereby resulting in signal subtraction.

The block diagram 1100 of Fig. 11 corresponds to the block diagram 500 of Fig. 5 with like reference signs indicating corresponding features. The associated processes in the SeNB 3100 may be restricted to at least one of:

- measurement, sampling and signaling of the of the air interface rate to the MeNB 308;
- measurement, sampling and signaling of the downlink delay to the MeNB 308; and
- measurement, sampling and signaling of the latest ACKed SN number to the MeNB 308.

In Fig. 11, another embodiment is shown, in which the latest acknowledged sequence number is derived from the ACK/NACK flow 404 into the MeNB 308. The SeNB functionality does not need to be further detailed.

The discrete time MeNB flow controller includes a reference signal generator. The reference signal generator derives the reference value $w_{ref,M}(t)$ for the desired number of packets (or sequence number difference) in the queue of the SeNB, this is typically done using a configured reference dwell time value $T_{ref,M}(t)$ for the queue of the SeNB, and the reported air interface rate $r_{air}(t-T_{UL})$ from the SeNB. Typically, the two quantities are just multiplied to result in the reference value $w_{ref,M}(t)$.

The controller further includes a difference equation iterator 503. The block 502 iterates the discrete time difference equation that represents the discretized controller filter. A procedure to obtain the coefficients of the linear difference equation is described above. The input signal to the block 502 includes the control error $e(t)$. The block 502 produces a command signal $u(t)$, representing a commanded data rate.

The controller further includes a control signal limiter 504. The data rate can obviously not be negative, since there is no downlink signaling of packets, from the SeNB to the MeNB. The function of the control signal limiter is therefore to modify any negative $u(t)$ to 0. This is denoted by the operator $[]_+$ in Fig. 11.

The controller further includes a data rate to sequence number summator 506. The task of the controller includes computing the number of packets to send in the next sampling period according to the step 208. This is so since the mechanism is based on a window-based controller for the packets in flight. To go from the rate output $[u(t)]_+$ to the new sequence number, an integration is implemented in the mechanism. In discrete time, the integration is reduced to a summation to get the latest sequence number 426 sent this sampling period.

The controller further includes a packet FIFO delay buffer. The maximum sequence number 426 that was sent towards the SeNB 310 during each sampling period, as well as the absolute time, is entered into this buffer, e.g., for later comparison to the latest acknowledged sequence number 424 from the SeNB 310. The function block may be implemented by a FIFO buffer, e.g., for at least 2 values per sampling period.

The controller further includes an uplink delay estimator. Based on time tagging of ACK/NACKs in the SeNB 310 and an absolute time shared between the MeNB 308 and the SeNB 310, the uplink delay time 1104 of the uplink is estimated in this block. To provide a smooth estimate, filtering may be applied.

The controller further includes a latest ACK SN extractor. This block extracts the sequence number 424 from the signal received from the SeNB 310. The extracted signal becomes $y_{UL,M}(t)$.

For configuring a frequency-shaping feedback filter $C(s)$ shown at reference sign 502, the stability of the feedback loop may be computed. That is done with the use of the Popov criterion which is described, e.g., in C. A. Desoer and M. Vidyasagar, "Feedback Systems, Input-Output Properties", pp. 186-191, Academic Press, 1975. This criterion is based on the following definitions:

$$\left\| f(\cdot) \right\|_p^p = \int_0^\infty \left| f(t) \right|^p dt < \infty$$

$L_p$ denotes a space of functions that fulfill . . . . . A mapping $A$ is $L_p$-stable, if there are constants $k_1$ and $k_2$ such that

$$\left\| Af \right\|_p \le k_1 \left\| f \right\|_p + k_2 \; .$$

$A$ denotes a set of distributions $f(t) = \sum_{i=0}^\infty f_i \delta(t - T_i) + f_A(t),$ $t \ge 0$, wherein $\sum_{i=0}^\infty \left| f_i \right| < \infty$ and $\int_0^\infty \left| f_A(t) \right| dt < \infty$ .

$\hat{A}$ denotes the set of Laplace transforms of distributions in $A$.

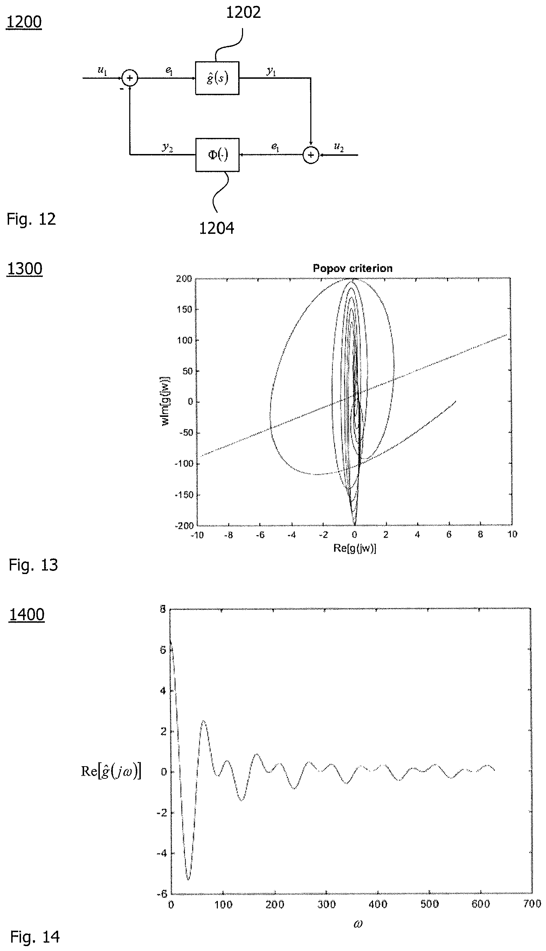

The Popov stability criterion is valid for the block diagram of Fig. 12. The Popov criterion is given by: Assume that $u_1, u_2, \dot{u}_2 \in L_2$, that $g(\cdot) \in A$, and that $0 \le \sigma\Phi(\sigma) \le \beta\sigma^2$. Then, the closed-loop system is $L_2$-stable, if there exists a $q > 0$ such that

$$\mathrm{Re}\left[ (1 + jq\omega)\hat{g}(j\omega) \right] + \frac{1}{\beta} = \delta > 0 \qquad \forall \omega \ge 0.$$

The Popov stability criterion may be interpreted graphically. The graphical interpretation of the condition above is that if the Popov plot of the loop gain $\omega \to \mathrm{Re}[\hat{g}(j\omega)] + j\omega\mathrm{Im}[\hat{g}(j\omega)]$ lies to the right of a line through $-1/\beta + 0j$ with any positive slope $q^{-1}$, then the closed-loop system is stable. The Popov line is hence allowed to be rotated to the most beneficial slope around $-1/\beta + 0j$.

By way of illustration, assume that the controller 108, e.g., the filter 502 acts proportionally to the error $e(s)$. Since the control error represents the number of PDCP PDUs to send during the sampling period $T_s$ in the step 208, it follows that the commanded rate is $C(s) = K/T_s$, wherein the constant $k = 1$ in one embodiment. Let $T_1 = T_{UL} + T_{DL}$ and $T_2 = T + T_{UE}$. It is easy to see that the loop gain can be computed by multiplication and summation of the Laplace transforms of the blocks in the loops from the signal $r_{DL,M}(s)$ to $u(s)$. The nonlinearity $\Phi(\cdot)$ has gain 1 and, hence, $\beta = 1$.

The loop gain becomes

$$\hat{g}(s) = \frac{K}{T_s} \frac{1}{s} e^{-s(T_{UL} + T_{DL})} \left( 1 - e^{-s(T + T_{UE})} \right)$$

From the loop gain, it immediately follows that the real and imaginary parts of the complex loop gain frequency function become

$$\mathrm{Re}[\hat{g}(j\omega)] = \frac{K}{\omega T_s} \left( -\sin(\omega T_1)(1 - \cos(\omega T_2)) + \cos(\omega T_1)\sin(\omega T_2) \right) \underset{\omega \to \infty}{\to} 0 \; ,$$

and

$$\mathrm{Im}[\hat{g}(j\omega)] = \frac{K}{\omega T_s} \left( -\cos(\omega T_1)(1 - \cos(\omega T_2)) - \sin(\omega T_1)\sin(\omega T_2) \right) \underset{\omega \to \infty}{\to} 0 \; .$$

Noting that the loop gain is strictly proper, the Popov plot 1300 in Fig. 13 results for the parameters $K = 1$, $T_s = 0.010s$, $T_{UE} = 0.005s$, $T = 0.060s$, $T_{DL} = 0.030s$ and $T_{UL} = 0.030s$.

It can immediately be seen from plot 1300 that stability is not implied by the Popov criterion in this case. The reason is that the low-frequency parts of the curve 1300 passes to the left of parts of the Popov line, irrespective how this line is turned around -1. To see that it is the lower frequencies that are the problem, Fig. 14 shows a plot 1400 of the real part of the Popov plot, as a function of the angular frequency $\omega$. Clearly, the amplitude is highest for the lower frequencies.

In an advanced embodiment, the controller filter $C(s)$ shown at reference sign 502 is selected as a frequency-selective filter, e.g., based on a frequency-selective Laplace transform, with a low gain for lower frequencies.

For low-frequency attenuating, a frequency-shaping controller filter 502 is described. In one embodiment, the frequency-shaping filter 502 is selected as

$$C(s) = K \frac{s+b}{s+Nb}$$

wherein the parameters include:

$K = 1$ which sets the high-frequency gain to 1, since $C(j\omega) = K \dfrac{j\omega+b}{j\omega+Nb} \underset{\omega \to \infty}{\to} 1$ ,

$b$ determines the angular frequency where the gain starts to rise significantly.

$N$ is the low-frequency gain attenuation factor since $C(j\omega) = K \dfrac{j\omega+b}{j\omega+Nb} \underset{\omega \to 0}{\to} \dfrac{1}{N}$ .

A study of Fig. 13 reveals that the low-frequency gain can be reduced by a factor of 7.5 to make the size of the real part less than one. This low-frequency gain is needed in regions for which the plot 1300 shows the real part to be greater than 1, i.e. below 150 rad/s.

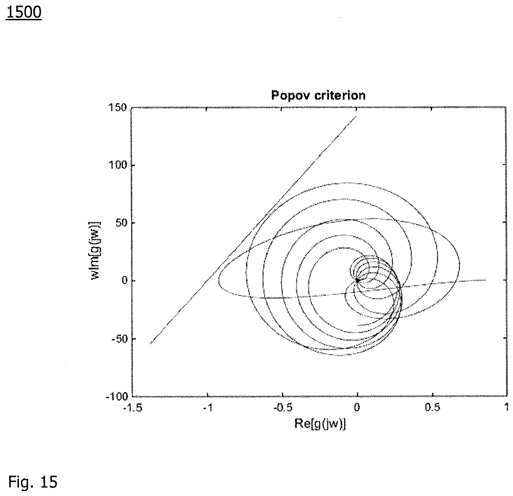

Hence, $N = 7.5$ and $b = 150/N$ are suitable parameters. This choice of $C(s)$ results in the Popov plot 1500 in Fig. 15 which establishes that the closed loop system is globally stable.

Any of above embodiments and implementations may include measurements of the downlink transport delay 1102 and the uplink transport delay 1104, e.g., together with signaling means for signaling of the downlink transport delay 1102 to the flow control mechanism, i.e., the module 106, of the MeNB 308.

A sequence number 426 of the last sent packet may be delayed, e.g., by using a delay buffer 106 in the MeNB 308. The delayed sequence number 510 may be used to represent an estimate of the top 406 of the window 402 in the SeNB 310. This top 406 of the window 402 may be used within the flow control according to the step 208 performed by the MeNB 308.

Frequency-shaping control filtering may be performed when computing the control signal that generates the control command on the number of further data packets 430 to be send to the SeNB 310, in the present sampling time instance. The result of this is an embodiment of the device 100 that is guaranteed to be stable, i.e. that give consistent control of the SeNB window 402, thereby providing improved performance and a better user experience.

As has become apparent from above description of exemplary embodiments, end user experience may be improved by lower download times due to a more accurate and more efficient feedback control of a buffer in the SeNB. A globally stable control algorithm, which is guaranteed to perform consistently at all times, may be realized.

At least some embodiments account for delays and consistently user delayed information available to a control mechanism in the MeNB. The overall quantity that can be accurately controlled by the mechanism includes the dwell time and/or a data volume in the buffer window of the SeNB. Thus, control accuracy become significantly improved and/or situations of rapid changes in the delays can be handled. The feedback control objective can be based on measurements.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

**Claims**

1. A method (200) of sending data packets in a radio access network (304) including a master base station (308) and at least one secondary base station (310) for providing multi-connectivity to a user equipment (306), the method performed or triggered by the master base station comprising the following steps:

sending or controlling sending (202), via a first link (314), at least one first data packet (415; 423) to be transmitted through a secondary base station (310) to the user equipment (306);

receiving (204), via a second link (316), a feedback (432) including an acknowledgment (424) for at least one second data packet (408) transmitted through the secondary base station (310) to the user equipment (306);

delaying (206) an indicator (426) for the at least one first data packet (415; 423) by a delay time (1102, 1104) depending on the first link (314) and the second link (316), wherein the indicator, prior to delaying the indicator, is indicative of a sequence number of a data packet most recently sent to the secondary base station;

sending or controlling sending (208), via the first link (314), at least one further data packet (430) to be transmitted through the secondary base station (310) to the user equipment (306), wherein the sending or controlling sending of the at least one further data packet depends on the delayed indicator for the at least one first data packet (415; 423), a delay associated with the first link (314) and the second link (316), and the feedback (432) for the at least one second data packet (408), the sending or controlling sending of the at least one further data packet depends on the difference (520) between the sequence number of the delayed indicator (510) and the sequence number of the acknowledgment (424).

2. The method of claim 1, wherein the first link (314) is a backhaul link from the master base station (308) to the secondary base station (310), and/or the second link (316) is a backhaul link from the secondary base station (310) to the master base station (308).

3. The method of any one of claims 1 to 2, wherein the delay time (1102, 1104) corresponds to a packet round trip from the master base station (308) to the secondary base station (310) and from the secondary base station (310) to the master base station (308).

4. The method of any one of claims 1 to 3, further comprising:
measuring the delay time (1102, 1104) or receiving a measurement for determining the delay time (1102, 1104).

5. The method of any one of claims 1 to 4, wherein the delay time (1102, 1104) is estimated based on a time measured for a one-way packet trip from the master base station (308) to the secondary base station (310) and/or from the secondary base station (310) to the master base station (308).

6. The method of any one of claims 1 to 5, further comprising:

storing in a master buffer (318) at the master base station (308) data packets received from a core network for transmission to the user equipment (306) using the multi-connectivity,
wherein the at least one first data packet (415; 423) and/or the at least one further data packet sent to the secondary base station (310) is retrieved from the master buffer (318) and sent from the master base station (308).

7. The method of any one of claims 1 to 6, wherein each of the data packets includes a sequence number.

8. The method of claim 7, wherein the indicator (426) includes the sequence number of the at least one first data packet (415; 423), and the acknowledgement (424) includes the sequence number of the at least one second data packet (408),

9. The method of claim 8, wherein the feedback (432) further includes a requested window size (412), and a number of the at least one further data packet depends on the difference (520) and the requested window size (412).

10. The method of any one of claims 1 to 9, wherein the indicator (426) of the at least one first data packet (415; 423) results from and/or is subjected to an infinite impulse response filter (502) that depends on the delay time (1102, 1104).

11. The method of claim 10, wherein the filter (502) is adapted to the delay time (1102, 1104) for achieving stability.

12. A computer program product comprising program code portions for performing all the steps of any one of the claims 1 to 11 when the computer program product is executed on one or more computing devices.

13. A master base station (308) for sending data packets in a radio access network (304) including the master base station (308) and at least one secondary base station (310) for providing multi-connectivity to a user equipment (306), the master base station (308) comprising:

a first data packet (415; 423) sending module (102) for sending or controlling sending, via a first link, at least one first data packet (415; 423) to be transmitted through the secondary base station (310) to the user equipment (306);

a feedback (432) receiving module (104) for receiving, via a second link, a feedback (432) including an acknowledgment (424) for at least one second data packet (408) transmitted through the secondary base station (310) to the user equipment (306);

an indicator delaying module (106) for delaying an indicator (426) for the at least one first data packet (415; 423) by a delay time (1102, 1104) depending on the first link (314) and the second link (316), wherein the indicator, prior to delaying the indicator is indicative of a sequence number of a data packet most recently sent to the secondary base station; and

a further data packet sending module (108) for sending or controlling sending (208), via the first link (314), at least one further data packet (430) to be transmitted through the secondary base station (310) to the user equipment (306), wherein the sending or controlling sending of the at least one further data packet depends on the delayed indicator for the at least one first data packet (415; 423), a delay associated with the first link (314) and the second link (316), and the feedback (432) for the at least one second data packet (408), the sending or controlling sending of the at least one further data packet depends on the difference (520) between the sequence number of the delayed indicator (510) and the sequence number of the acknowledgment (424).

## Patentansprüche

1.  Verfahren (200) zum Senden von Datenpaketen in einem Funkzugangsnetz (304), einschließlich einer Hauptbasisstation (308) und mindestens einer sekundären Basisstation (310), zum Bereitstellen von Multikonnektivität für eine Benutzereinrichtung (306), wobei das Verfahren, das durch die Hauptbasisstation durchgeführt oder ausgelöst wird, die folgenden Schritte umfasst:

    Senden oder Steuern des Sendens (202), über einen ersten Link (314), von mindestens einem ersten Datenpaket (415; 423), das durch eine sekundäre Basisstation (310) zu der Benutzereinrichtung (306) übertragen werden soll;

    Empfangen (204), über einen zweiten Link (316), einer Rückkopplung (432), einschließlich einer Bestätigung (424) für mindestens ein zweites Datenpaket (408), das durch die sekundäre Basisstation (310) zu der Benutzereinrichtung (306) übertragen wird;

    Verzögern (206) eines Indikators (426) für das mindestens eine erste Datenpaket (415; 423) um eine Verzögerungszeit (1102, 1104) in Abhängigkeit von dem ersten Link (314) und dem zweiten Link (316), wobei der Indikator, vor dem Verzögern des Indikators, eine Sequenznummer eines Datenpakets, das zuletzt zu der sekundären Basisstation gesendet wurde, anzeigt;

    Senden oder Steuern des Sendens (208), über den ersten Link (314), von mindestens einem weiteren Datenpaket (430), das durch die sekundäre Basisstation (310) zu der Benutzereinrichtung (306) gesendet werden soll, wobei das Senden oder Steuern des Sendens des mindestens einen weiteren Datenpakets von dem verzögerten Indikator für das mindestens eine erste Datenpaket (415; 423), einer Verzögerung in Verbindung mit dem ersten Link (314) und dem zweiten Link (316) und der Rückkopplung (432) für das mindestens eine zweite Datenpaket (408) abhängt, wobei das Senden oder Steuern des Sendens des mindestens einen weiteren Datenpakets von der Differenz (520) zwischen der Sequenznummer des verzögerten Indikators (510) und der Sequenznummer der Bestätigung (424) abhängt.

2.  Verfahren nach Anspruch 1, wobei der erste Link (314) ein Backhaul-Link von der Hauptbasisstation (308) zu der sekundären Basisstation (310) ist und/oder der zweite Link (316) ein Backhaul-Link von der sekundären Basisstation (310) zu der Hauptbasisstation (308) ist.

3.  Verfahren nach einem der Ansprüche 1 bis 2, wobei die Verzögerungszeit (1102, 1104) einem Paketumlauf von der Hauptbasisstation (308) zu der sekundären Basisstation (310) und von der sekundären Basisstation (310) zu der Hauptbasisstation (308) entspricht.

4.  Verfahren nach einem der Ansprüche 1 bis 3, ferner umfassend:
    Messen der Verzögerungszeit (1102, 1104) oder Empfangen einer Messung zum Bestimmen der Verzögerungszeit (1102, 1104).

5.  Verfahren nach einem der Ansprüche 1 bis 4, wobei die Verzögerungszeit (1102, 1104) basierend auf einer Zeit, die für einen Einwegpaketlauf von der Hauptbasisstation (308) zu der sekundären Basisstation (310) und von der sekundären Basisstation (310) zu der Hauptbasisstation (308) geschätzt wird.

6. Verfahren nach einem der Ansprüche 1 bis 5, ferner umfassend:

Speichern, in einem Hauptpuffer (318) an der Hauptbasisstation (308), von Datenpaketen, die von einem Kernnetz empfangen werden, zur Übertragung zu der Benutzereinrichtung (306) unter Verwendung der Multikonnektivität,
wobei das mindestens eine erste Datenpaket (415; 423) und/oder das mindestens eine weitere Datenpaket, das zu der sekundären Basisstation (310) gesendet wurde, von dem Hauptpuffer (318) abgerufen und von der Hauptbasisstation (308) gesendet wird.

7. Verfahren nach einem der Ansprüche 1 bis 6, wobei jedes der Datenpakete eine Sequenznummer einschließt.

8. Verfahren nach Anspruch 7, wobei der Indikator (426) die Sequenznummer des mindestens einen ersten Datenpakets (415; 423) einschließt und die Bestätigung (424) die Sequenznummer des mindestens einen zweiten Datenpakets (408) einschließt,

9. Verfahren nach Anspruch 8, wobei die Rückkopplung (432) ferner eine angeforderte Fenstergröße (412) einschließt und eine Anzahl des mindestens einen weiteren Datenpakets von der Differenz (520) und der angeforderten Fenstergröße (412) abhängt.

10. Verfahren nach einem der Ansprüche 1 bis 9, wobei der Indikator (426) des mindestens einen ersten Datenpakets (415; 423) aus einem Filter mit unendlicher Impulsantwort (502), der von der Verzögerungszeit (1102, 1104) abhängt, resultiert und/oder diesem unterliegt.

11. Verfahren nach Anspruch 10, wobei der Filter (502) an die Verzögerungszeit (1102, 1104) angepasst ist, um Stabilität zu erreichen.

12. Computerprogrammprodukt, umfassend Programmcodeabschnitte zum Durchführen aller Schritte nach einem der Ansprüche 1 bis 11, wenn das Computerprogrammprodukt auf einer oder mehreren Rechenvorrichtungen ausgeführt wird.

13. Hauptbasisstation (308) zum Senden von Datenpaketen in einem Funkzugangsnetz (304), einschließlich der Hauptbasisstation (308) und mindestens einer sekundären Basisstation (310), zum Bereitstellen von Multikonnektivität für eine Benutzereinrichtung (306), die Hauptbasisstation (308) umfassend:

ein Sendemodul (102) für ein erstes Datenpaket (415; 423) zum Senden oder Steuern des Sendens, über einen ersten Link, von mindestens einem ersten Datenpaket (415; 423), das durch die sekundäre Basisstation (310) zu der Benutzereinrichtung (306) übertragen werden soll;
ein Empfangsmodul (104) für eine Rückkopplung (432) zum Empfangen, über einen zweiten Link, einer Rückkopplung (432), einschließlich einer Bestätigung (424) für mindestens ein zweites Datenpaket (408), das durch die sekundäre Basisstation (310) zu der Benutzereinrichtung (306) übertragen wird;
ein Indikatorverzögerungsmodul (106) zum Verzögern eines Indikators (426) für das mindestens eine erste Datenpaket (415; 423) um eine Verzögerungszeit (1102, 1104) in Abhängigkeit von dem ersten Link (314) und dem zweiten Link (316), wobei der Indikator, vor dem Verzögern des Indikators, eine Sequenznummer eines Datenpakets, das zuletzt zu der sekundären Basisstation gesendet wurde, anzeigt; und
ein Sendemodul (108) für ein weiteres Datenpaket zum Senden oder Steuern des Sendens (208), über den ersten Link (314), von mindestens einem weiteren Datenpaket (430), das durch die sekundäre Basisstation (310) zu der Benutzereinrichtung (306) gesendet werden soll, wobei das Senden oder Steuern des Sendens des mindestens einen weiteren Datenpakets von dem verzögerten Indikator für das mindestens eine erste Datenpaket (415; 423), einer Verzögerung in Verbindung mit dem ersten Link (314) und dem zweiten Link (316) und der Rückkopplung (432) für das mindestens eine zweite Datenpaket (408) abhängt, wobei das Senden oder Steuern des Sendens des mindestens einen weiteren Datenpakets von der Differenz (520) zwischen der Sequenznummer des verzögerten Indikators (510) und der Sequenznummer der Bestätigung (424) abhängt.

**Revendications**

1. Procédé (200) d'envoi de paquets de données dans un réseau d'accès radio (304) incluant une station de base maître (308) et au moins une station de base secondaire (310) pour fournir une connectivité multiple à un équipement utilisateur (306), le procédé mis en œuvre ou déclenché par la station de base maître comprenant les étapes suivantes :

   l'envoi ou la commande d'envoi (202), via une première liaison (314), d'au moins un premier paquet de données (415 ; 423) à transmettre par l'intermédiaire d'une station de base secondaire (310) à l'équipement utilisateur (306) ;
   la réception (204), via une deuxième liaison (316), d'une rétroaction (432) incluant un accusé de réception (424) pour au moins un deuxième paquet de données (408) transmis par l'intermédiaire de la station de base secondaire (310) à l'équipement utilisateur (306) ;
   le fait de retarder (206) un indicateur (426) pour l'au moins un premier paquet de données (415 ; 423) d'un temps de retard (1102, 1104) dépendant de la première liaison (314) et de la deuxième liaison (316), dans lequel l'indicateur, avant de retarder l'indicateur, est indicatif d'un numéro de séquence d'un paquet de données envoyé le plus récemment à la station de base secondaire ;
   l'envoi ou la commande d'envoi (208), via la première liaison (314), d'au moins un autre paquet de données (430) à transmettre par l'intermédiaire de la station de base secondaire (310) à l'équipement utilisateur (306), dans lequel l'envoi ou la commande d'envoi de l'au moins un autre paquet de données dépend de l'indicateur retardé pour l'au moins un premier paquet de données (415 ; 423), d'un retard associé à la première liaison (314) et à la deuxième liaison (316), et de la rétroaction (432) pour l'au moins un deuxième paquet de données (408), l'envoi ou la commande d'envoi de l'au moins un autre paquet de données dépend de la différence (520) entre le numéro de séquence de l'indicateur retardé (510) et le numéro de séquence de l'accusé de réception (424).

2. Procédé selon la revendication 1, dans lequel la première liaison (314) est une liaison terrestre depuis la station de base maître (308) vers la station de base secondaire (310), et/ou la deuxième liaison (316) est une liaison terrestre depuis la station de base secondaire (310) vers la station de base maître (308).

3. Procédé selon l'une quelconque des revendications 1 à 2, dans lequel le temps de retard (1102, 1104) correspond à un aller-retour de paquet depuis la station de base maître (308) vers la station de base secondaire (310) et depuis la station de base secondaire (310) vers la station de base maître (308).

4. Procédé selon l'une quelconque des revendications 1 à 3, comprenant en outre :
   la mesure du temps de retard (1102, 1104) ou la réception d'une mesure pour déterminer le temps de retard (1102, 1104).

5. Procédé selon l'une quelconque des revendications 1 à 4, dans lequel le temps de retard (1102, 1104) est estimé sur la base d'un temps mesuré pour un aller simple de paquet depuis la station de base maître (308) vers la station de base secondaire (310) et/ou depuis la station de base secondaire (310) vers la station de base maître (308).

6. Procédé selon l'une quelconque des revendications 1 à 5, comprenant en outre :

   le stockage dans un tampon maître (318) au niveau de la station de base maître (308) de paquets de données reçus depuis un réseau central pour transmission à l'équipement utilisateur (306) en utilisant la connectivité multiple,
   dans lequel l'au moins un premier paquet de données (415 ; 423) et/ou l'au moins un autre paquet de données envoyé à la station de base secondaire (310) sont récupérés depuis le tampon maître (318) et envoyés depuis la station de base maître (308).

7. Procédé selon l'une quelconque des revendications 1 à 6, dans lequel chacun des paquets de données inclut un numéro de séquence.

8. Procédé selon la revendication 7, dans lequel l'indicateur (426) inclut le numéro de séquence de l'au moins un premier paquet de données (415 ; 423), et l'accusé de réception (424) inclut le numéro de séquence de l'au moins un deuxième paquet de données (408),

**9.** Procédé selon la revendication 8, dans lequel la rétroaction (432) inclut en outre une taille de fenêtre demandée (412), et un nombre de l'au moins un autre paquet de données dépend de la différence (520) et de la taille de fenêtre demandée (412).

**10.** Procédé selon l'une quelconque des revendications 1 à 9, dans lequel l'indicateur (426) de l'au moins un premier paquet de données (415 ; 423) résulte de et/ou est soumis à un filtre à réponse impulsionnelle infinie (502) qui dépend du temps de retard (1102, 1104).

**11.** Procédé selon la revendication 10, dans lequel le filtre (502) est adapté au temps de retard (1102, 1104) pour obtenir une stabilité.

**12.** Produit programme informatique comprenant des portions de code de programme pour mettre en œuvre toutes les étapes selon l'une quelconque des revendications 1 à 11 lorsque le produit programme informatique est exécuté sur un ou plusieurs dispositifs informatiques.

**13.** Station de base maître (308) pour envoyer des paquets de données dans un réseau d'accès radio (304) incluant la station de base maître (308) et au moins une station de base secondaire (310) pour fournir une connectivité multiple à un équipement utilisateur (306), la station de base maître (308) comprenant :

un module d'envoi (102) de premier paquet de données (415 ; 423) pour envoyer ou commander l'envoi, via une première liaison, d'au moins un premier paquet de données (415 ; 423) à transmettre par l'intermédiaire de la station de base secondaire (310) à l'équipement utilisateur (306) ;
un module de réception (104) de rétroaction (432) pour recevoir, via une deuxième liaison, une rétroaction (432) incluant un accusé de réception (424) pour au moins un deuxième paquet de données (408) transmis par l'intermédiaire de la station de base secondaire (310) à l'équipement utilisateur (306) ;
un module de retard d'indicateur (106) pour retarder un indicateur (426) pour l'au moins un premier paquet de données (415 ; 423) d'un temps de retard (1102, 1104) dépendant de la première liaison (314) et de la deuxième liaison (316), dans lequel l'indicateur, avant de retarder l'indicateur est indicatif d'un numéro de séquence d'un paquet de données envoyé le plus récemment à la station de base secondaire ; et
un module d'envoi d'autre paquet de données (108) pour l'envoi ou la commande d'envoi (208), via la première liaison (314), d'au moins un autre paquet de données (430) à transmettre par l'intermédiaire de la station de base secondaire (310) à l'équipement utilisateur (306), dans lequel l'envoi ou la commande d'envoi de l'au moins un autre paquet de données dépend de l'indicateur retardé pour l'au moins un premier paquet de données (415 ; 423), d'un retard associé à la première liaison (314) et à la deuxième liaison (316), et de la rétroaction (432) pour l'au moins un deuxième paquet de données (408), l'envoi ou la commande d'envoi de l'au moins un autre paquet de données dépend de la différence (520) entre le numéro de séquence de l'indicateur retardé (510) et le numéro de séquence de l'accusé de réception (424).

<u>100</u>

First Data Packet Sending Module — 102

Feedback Receiving Module — 104

Indicator Delaying Module — 106

Further Data Packet Sending Module — 108

Fig. 1

<u>200</u>

Send or control sending, via a first link, at least one first data packet to be transmitted through a secondary base station to a user equipment with multi-connectivity — 202

Receive, via a second link, a feedback including an acknowledgment for at least one second data packet transmitted through the secondary base station to the user equipment — 204

Delay an indicator for the at least one first data packet by a delay time depending on the first link and the second link — 206

Sending or control sending, via the first link, at least one further data packet to be transmitted through the secondary base station to the user equipment, wherein the sending or controlling sending of the at least one further data packet depends on the delayed indicator for the at least one first data packet and the feedback for the at least one second data packet — 208

Fig. 2

300

302

322

314 312

PDCP

318

MeNB

backhaul

326

RLC

320

SeNB

feedback

304

RLC

324

MAC

316

MAC

PHY

PHY

310

308

PHY PHY

MAC MAC

RLC RLC

UE

PDCP

306

Fig. 3

Fig. 4

EP 3 348 027 B1

500

Fig. 5

600

$$r_{DL,M}(t) = \frac{dq_{DL,M}(t)}{dt} \qquad r_{DL,S}(t) = sat\big(r_{DL,M}(t - T_{DL})\big)$$

Fig. 6

700

$$\overline{\overline{q}}_S(t) = \int_{t_0}^{t} r_{DL,S}(\tau)d\tau \qquad \overline{q}_S(t) = \overline{\overline{q}}(s) - q_{air}(s) \qquad T = q_S(t)/r_{air}(t)$$

Fig. 7

800

850

$$\overline{\overline{q}}_S(s) \longrightarrow \boxed{e^{-sT}} \longrightarrow \boxed{e^{-sT_{UE}}} \xrightarrow{y_{UL,S}(s)}$$

$T$

$$y_{UL,S}(t) = \overline{\overline{q}}(t - T - T_{UE})$$

Time tags $\longrightarrow$ Estimator $\xrightarrow{T_{DL,S}(s)}$

Fig. 8

900

910

920

$$\xrightarrow{y_{UL,S}(s)} \boxed{e^{-sT_{UL}}} \xrightarrow{y_{UL,M}(s)}$$

$$\xrightarrow{q_{UL,ref,S}(s)} \boxed{ke^{-sT_{UL}}} \xrightarrow{T_{ref,M}(s)}$$

$$\xrightarrow{T_{DL,S}(s)} \boxed{e^{-sT_{UL}}} \xrightarrow{T_{DL,M}(s)}$$

$$y_{UL,M}(t) = y_{UL,S}(t - T_{UL})$$

$$T_{ref,M}(t) = kq_{UL,ref,S}(t - T_{UL})$$

$$T_{DL,M}(t) = T_{DL,S}(t - T_{UL})$$

Fig. 9

1000

Fig. 10

Fig. 11

EP 3 348 027 B1

1200

1202

1204

Fig. 12

1300

Fig. 13

1400

Fig. 14

1500

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150085646 A1

- EP 2835925 A1

**Non-patent literature cited in the description**

- **C. A. DESOER ; M. VIDYASAGAR.** Feedback Systems, Input-Output Properties. Academic Press, 1975, 186-191